# EUROPEAN PATENT APPLICATION

(11) **EP 2 048 573 A1**
(43) Date of publication of application: **15.04.2009**
(21) Application number: 08017811.4
(22) Date of filing: 10.10.2008
(51) Int. Cl.: G06F 3/048, G09G 5/08

(54) **Mobile terminal and pointer display method thereof**

(30) Priority: 12.10.2007 KR 20070103031
(71) Applicant: LG Electronics Inc., Seoul 150-010 (KR)
(72) Inventor: Ahn, Hyun Ju, Seoul 153-023 (KR)
(74) Representative: Katérle, Axel

(57) **Abstract**

A mobile terminal and a pointer display method thereof are provided. The pointer display method includes displaying a pointer on the screen of a mobile terminal, hiding the pointer from view if the pointer is moved into a pointer-containing zone, and notifying a user that the pointer is contained in the pointer-containing zone. In this manner, it is possible to effectively hide the pointer from view according to user input.

## Description

The present application claims the benefit of Korean Application No. 2007-0103031, filed on October 12, 2007 in the Korean Intellectual Property Office, the disclosure of which is incorporated herein by reference.

### BACKGROUND OF THE INVENTION

### Field of the Invention

The present invention relates to a mobile terminal and a pointer display method thereof .

### Description of the Related Art

Mobile terminals are portable devices that can provide users with various services such as a voice calling service, a video calling service, an information input/output service, and a data storage service. These devices communicate via wireless networks through base stations and base station controllers. Examples of such interfaces utilized by these communication systems include frequency division multiple access (FDMA), time division multiple access (TDMA), code division multiple access (CDMA), and universal mobile telecommunications system (UMTS), the long term evolution (LTE) of the UMTS, and the global system for mobile communications (GSM).

As the types of services provided by mobile terminals diversify, an increasing number of mobile terminals have been equipped with various additional functions such as capturing photos or moving pictures, playing music files or moving image files, providing game programs, and receiving broadcast programs. Thus, these devices have evolved into multimedia players.

Various attempts have been made to realize such complicated functions via various hardware or software implementations. For example, various user interface environments, in which users are allowed to easily search for and choose desired functions, have been developed.

In the meantime, the demand for various designs for mobile terminals has steadily grown due to a growing tendency of considering mobile terminals as personal items that can represent users' personality.

In order to control various screen images displayed on the screen of a mobile terminal, a pointer may be provided on the screen of the mobile terminal. However, since the size of the screen of a mobile terminal is limited, the display of a pointer may cause inconvenience.

### SUMMARY OF THE INVENTION

The present invention provides a mobile terminal, which can hide a pointer from a screen, if necessary, and a pointer display method of the mobile terminal.

The present invention also provides a mobile terminal, which enables a user to recognize a pointer even when the pointer is hidden from view, and a pointer display method of the mobile terminal.

According to an aspect of the present invention, there is provided a pointer display method of a mobile terminal, the pointer display method including displaying a pointer for choosing a predetermined area or item and a pointer-containing zone, in which the pointer can be contained, on the screen of a mobile terminal; executing a function of hiding a pointer; and changing the display state of the pointer-containing zone if the pointer is hidden from view.

According to another aspect of the present invention, there is provided a mobile terminal including a display module configured to display a pointer for choosing a predetermined area or item and a pointer-containing zone, in which the pointer can be contained, on the screen of a mobile terminal; and a control unit configured to execute a function of hiding a pointer and to change the display state of the pointer-containing zone if the pointer is hidden from view.

According to another aspect of the present invention, there is provided a computer-readable recording medium having recorded thereon a computer program for executing a pointer display method of a mobile terminal, the pointer display method including displaying a pointer for choosing a predetermined area or item and a pointer-containing zone, in which the pointer can be contained, on the screen of a mobile terminal; executing a function of hiding a pointer; and changing the display state of the pointer-containing zone if the pointer is hidden from view.

### BRIEF DESCRIPTION OF THE DRAWINGS

The above and other features and advantages of the present invention will become more apparent by describing in detail preferred embodiments thereof with reference to the attached drawings in which:

FIG. 1 illustrates a block diagram of a mobile terminal according to an embodiment of the present invention;

FIG. 2 illustrates a front perspective view of the mobile terminal illustrated in FIG. 1;

FIG. 3 illustrates a rear perspective view of the mobile terminal illustrated in FIG. 2;

FIG. 4 illustrates a diagram of a pointer displayed on the screen of the mobile terminal shown in FIG. 2;

FIG. 5 illustrates a flowchart of a pointer display method of a mobile terminal, according to an embodiment of the present invention; and

FIGS. 6 and 7 illustrate diagrams for explaining the hiding of a pointer from view, as performed in the pointer display method illustrated in FIG. 5.

### DETAILED DESCRIPTION OF THE INVENTION

The present invention will hereinafter be described in detail with reference to the accompanying drawings in which exemplary embodiments of the invention are shown.

The term 'mobile terminal', as used herein, may indicate a mobile phone, a smart phone, a laptop book computer, a digital broadcast receiver, a personal digital assistant (PDA), a portable multimedia player (PMP), or a navigation device.

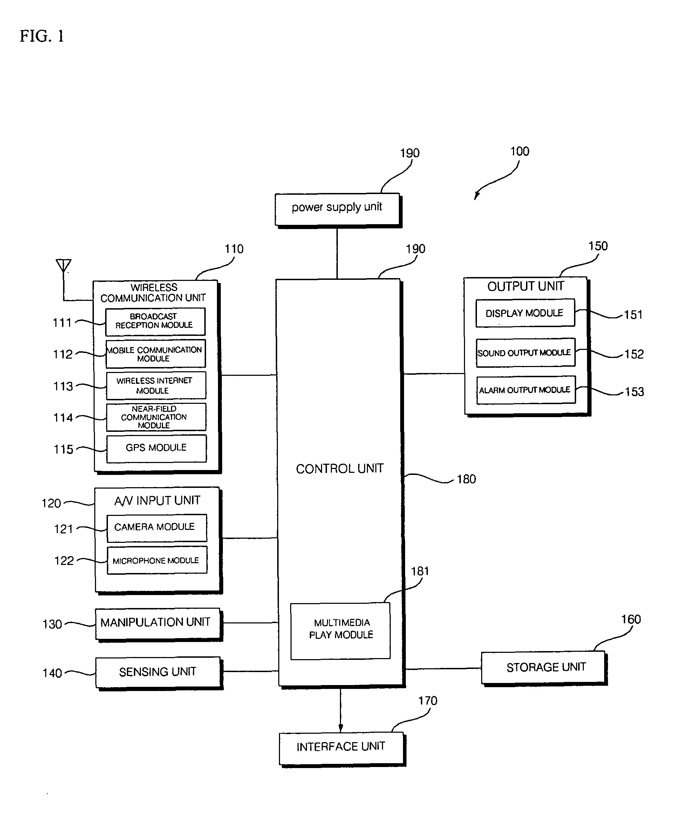

FIG. 1 illustrates a block diagram of a mobile terminal 100 according to an embodiment of the present invention. Referring to FIG. 1, the mobile terminal 100 may include a wireless communication unit 110, an audio/video (A/V) input unit 120, a manipulation unit 130, a sensing unit 140, an output unit 150, a storage unit 160, an interface unit 170, a control unit 180, and a power supply unit 190. Two or more of the wireless communication unit 110, the A/V input unit 120, the manipulation unit 130, the sensing unit 140, the output unit 150, the storage unit 160, the interface unit 170, the control unit 180, and the power supply unit 190 may be incorporated into a single unit, or some of the wireless communication unit 110, the AN input unit 120, the manipulation unit 130, the sensing unit 140, the output unit 150, the storage unit 160, the interface unit 170, the control unit 180, and the power supply unit 190 may be divided into two or more smaller units.

The wireless communication unit 110 may include a broadcast reception module 111, a mobile communication module 112, a wireless Internet module 113, a near field communication module 114, and a global positioning system (GPS) module 115. The mobile terminal can include other components, and all components of the mobile terminal are operatively coupled and configured.

The broadcast reception module 111 receives a broadcast signal and/or broadcast-related information from an external broadcast management server through a broadcast channel. Examples of the broadcast channel include a satellite channel and a terrestrial channel. The broadcast management server may be a server which generates broadcast signals and/or broadcast-related information and transmits the generated broadcast signals and/or the generated broadcast-related information or a server which receives and then transmits previously-generated broadcast signals and/or previously-generated broadcast-related information.

Examples of the broadcast-related information include broadcast channel information, broadcast program information and broadcast service provider information.

Examples of the broadcast signal include a TV broadcast signal, a radio broadcast signal, a data broadcast signal, or the combination of a data broadcast signal and either a TV broadcast signal or a radio broadcast signal.

The broadcast-related information may be provided to the mobile terminal 100 through a mobile communication network. In this case, the broadcast-related information may be received by the mobile communication module 112, rather than by the broadcast reception module 111.

The broadcast-related information may come in various forms, for example, electronic program guide (EPG) of digital multimedia broadcasting (DMB) or electronic service guide (ESG) of digital video broadcast-handheld (DVB-H).

The broadcast reception module 111 may receive the broadcast signal using various broadcasting systems such as digital multimedia broadcasting-terrestrial (DMB-T), digital multimedia broadcasting-satellite (DMB-S), media forward link only (MediaFLO), DVB-H, and integrated services digital broadcast-terrestrial (ISDB-T). In addition, the broadcast reception module 111 may be configured to be suitable for nearly all types of broadcasting systems other than those set forth herein.

The broadcast signal and/or the broadcast-related information received by the broadcast reception module 1110 may be stored in the storage unit 160.

The mobile communication module 112 transmits wireless signals to or receives wireless signals from at least one of a base station, an external terminal, and a server through a mobile communication network. The wireless signals may include various types of data according to whether the mobile terminal 100 transmits/receives voice call signals, video call signals, or text/multimedia messages.

The mobile communication module 113 may be a module for wirelessly accessing the Internet. The mobile communication module 113 may be embedded in the mobile terminal 100 or may be installed in an external device. The near field communication module 114 may be a module for near field communication. The near field communication module 114 may use various near field communication techniques such as Bluetooth, radio frequency identification (RFID), infrared data association (IrDA), ultra wideband (UWB), and ZigBee.

The GPS module 115 may receive position information from a plurality of GPS satellites.

The AN input unit 120 may be used to receive audio signals or video signals. The A/V input unit 120 may include a camera module 121 and a microphone module 122. The camera module 121 processes various image frames such as still images or moving images captured by an image sensor during a video call mode or an image capturing mode. The image frames processed by the camera module 121 may be displayed by a display module 151.

The image frames processed by the camera module 121 may be stored in the storage unit 160 or may be transmitted outside the mobile terminal 100 through the wireless communication unit 110. The mobile terminal 100 may include two or more camera modules 121.

The microphone module 122 receives external sound signals during a call mode, a recording mode, or a voice recognition mode with the use of a microphone and converts the sound signals into electrical sound data. In the call mode, the mobile communication module 1120 may convert the electrical sound data into data that can be readily transmitted to a mobile communication base station and then output the data obtained by the conversion. The microphone module 122 may use various noise removal algorithms to remove noise that may be generated during the reception of external sound signals.

The manipulation unit 130 generates key input data based on user input for controlling the operation of the mobile terminal 100. The manipulation unit 130 may be implemented as a keypad, a dome switch, a touch pad (either static pressure or constant electricity), a jog wheel, or a jog switch. In particular, if the manipulation unit 130 is implemented as a touch pad and forms a mutual layer structure along with the display module 151, the manipulation unit 130 and the display module 151 may be collectively referred to as a touch screen.

The sensing unit 140 determines a current state of the mobile terminal 100 such as whether the mobile terminal 100 is opened up or closed, the position of the mobile terminal 100 and whether the mobile terminal 100 is currently being in contact with a user, and generates a sensing signal for controlling the operation of the mobile terminal 100. For example, when the mobile terminal 100 is a slider-type mobile phone, the sensing unit 140 may determine whether the mobile terminal 100 is opened up or closed. In addition, the sensing unit 140 may determine whether the mobile terminal 100 is being turned on by the power supply unit 190 and whether the interface unit 170 is connected to an external device.

The interface unit 170 may interface with an external device that can be connected to the mobile terminal 100. The interface unit 170 may be a wired/wireless headset, an external battery charger, a wired/wireless data port, a card socket for, for example, a memory card) or a subscriber identification module (SIM)/user identity module (UIM) card, an audio input/output (I/O) terminal, a video I/O terminal, or an earphone. The interface unit 170 may receive data from an external device or may be powered by an external device. The interface unit 170 may transmit data provided by an external device to other components in the mobile terminal 100 or may transmit data provided by other components in the mobile terminal 100 to an external device.

The output unit 150 may output audio signals, video signals and alarm signals. The output unit 150 may include the display module 151, a sound output module 152, and an alarm output module 153.

The display module 151 may display various information processed by the mobile terminal 100. For example, if the mobile terminal 100 is in a call mode, the display module 151 may display a user interface (UI) or a graphic user interface (GUI) for making or receiving a call. If the mobile terminal 100 is in a video call mode or an image capturing mode, the display module 151 may display a UI or a GUI for capturing or receiving images.

As described above, if the display module 151 and the manipulation unit 130 form a mutual layer structure and are thus implemented as a touch screen, the display module 151 may be used not only as an output device but also as an input device. The display module 151 may include at least one of a liquid crystal display (LCD), a thin film transistor (TFT)-LCD, an organic light-emitting diode (OLED), a flexible display, and a three-dimensional (3D) display. The mobile terminal 100 may include two or more display modules 151. For example, the mobile terminal 100 may include an external display module (not shown) and an internal display module (not shown).

The sound output module 152 may output audio data received by the wireless communication unit 110 during a call reception mode, a call mode, a recording mode, a voice recognition mode, or a broadcast reception mode or may output audio data present in the storage unit 160. In addition, the sound output module 152 may output various sound signals associated with the functions of the mobile terminal 100 such as receiving a call or a message. The sound output module 152 may include a speaker and a buzzer.

The alarm output module 153 may output an alarm signal indicating the occurrence of an event in the mobile terminal 100. Examples of the event include receiving a call signal, receiving a message, and receiving a key signal. Examples of the alarm signal output by the alarm output module 153 include an audio signal, a video signal and a vibration signal. For example, the alarm output module 153 may vibrate upon receiving a call signal, a message or a key signal, thereby notifying a user of the occurrence of an event.

The display module 151 or the sound output module 152 may also output an alarm signal indicating the occurrence of an event in the mobile terminal 100.

The storage unit 160 may store various programs necessary for the operation of the control unit 180. In addition, the storage unit 160 may temporarily store various data such as a phonebook, messages, still images, or moving images.

The storage unit 160 may include at least one of a flash memory type storage medium, a hard disk type storage medium, a multimedia card micro type storage medium, a card type memory (e.g., a secure digital (SD) or extreme digital (XD) memory), a random access memory (RAM), and a read-only memory (ROM). The mobile terminal 100 may operate a web storage, which performs the functions of the storage unit 160 on the Internet.

The control unit 180 may control the general operation of the mobile terminal 100. For example, the control unit 180 may perform various control operations regarding making/receiving a voice call, transmitting/receiving data, or making/receiving a video call. The control unit 180 may include a multimedia play module 181, which plays multimedia data. The multimedia play module 181 may be implemented as a hardware device and may be installed in the control unit 180. Alternatively, the multimedia play module 181 may be implemented as a software program.

The power supply unit 190 is supplied with power by an external power source or an internal power source and supplies power to other components in the mobile terminal 100.

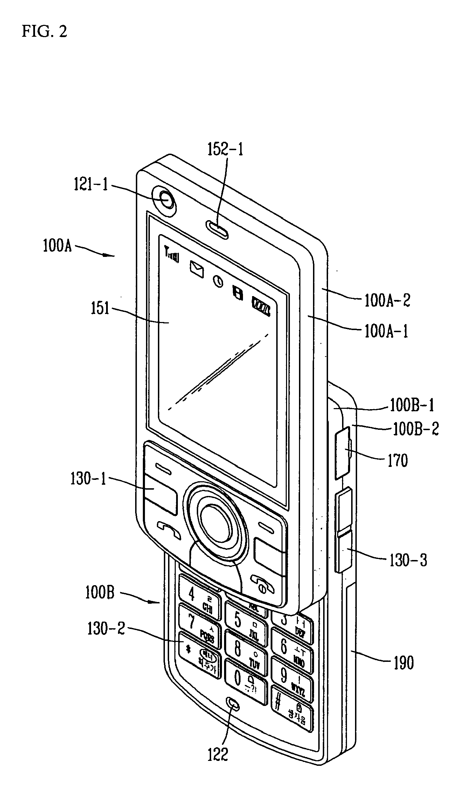

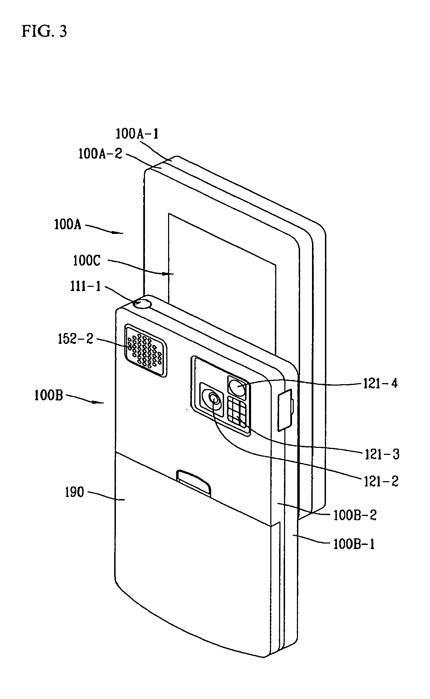

The exterior of the mobile terminal 100 will hereinafter be described in detail with reference to FIGS. 2 and 3. For convenience, assume that the mobile terminal 100 is a slider-type mobile phone. However, the present invention is not restricted to a slider-type mobile phone. Rather, the present invention can be applied to various mobile phones, other than a slider-type mobile phone.

FIG. 2 illustrates a front perspective view of the mobile terminal 100 shown in FIG. 1. Referring to FIG. 2, the mobile terminal 100 includes a first body 100a and a second body 100b configured to be able to slide in at least one direction along the first body 100A.

When the first body 100A overlaps the second body 100B, the mobile terminal 100 is determined to be closed. When the first body 100A exposes at least part of the second body 100B, the mobile terminal 100 is determined to be opened up.

When the mobile terminal 100 is closed, the mobile terminal 100 generally operates in a standby mode, and may be manually released from the standby mode by a user. When the mobile terminal 100 is opened up, the mobile terminal 100 generally operates in a call mode, and may be placed in a standby mode either manually by a user or automatically after the lapse of a predetermined amount of time.

The first body 100A may include a first front case 100A-1 and a first rear case 100A-2, which form the exterior of the first body 100A. Various electronic products may be installed in the empty space between the first front case 100A-1 and the first rear case 100A-2. At least one intermediate case may be additionally disposed between the first front case 100A-1 and the first rear case 100A-2.

The first front case 100A-1 and the first rear case 100A-2 may be formed of a synthetic resin through injection molding. Alternatively, the first front case 100A-1 and the first rear case 100A-2 may be formed of a metal such as stainless steel (STS) or titanium (Ti).

The display module 151, a first sound output module 152-1, a first camera module 121-1, and a first manipulation module 130-1 may be disposed in the first body, and particularly, in the first front case 100A-1.

The display module 151 may include an LCD or an OLED, which visually represents information.

Since a touch pad is configured to overlap the display module 151 and thus to realize a layer structure, the display module 151 may serve as a touch screen. Thus, it is possible for a user to input information to the display module 151 simply by touching the display module 151.

The first sound output module 152-1 may be implemented as a receiver or a speaker.

The first camera module 121-1 may be configured to capture a still image or a moving image of a user. The first manipulation module 130-1 may receive various commands for controlling the operation of the mobile terminal 100.

The second body 100B may include a second front case 100B-1 and a second rear case 100B-2, which form the exterior of the second body 100B.

A second manipulation module 130-2 may be disposed at the front of the second body 100B, and particularly, at the front of the second front case 100B-1. A third manipulation module 130-3, the microphone module 122, and the interface module 170 may be disposed on the second front case 100B-1 or the second rear case 100B-2.

The first through third manipulation modules 130-1 through 130-3 may constitute the manipulation unit 130. The manipulation unit 130 may adopt various manipulation methods as long as they can offer tactile feedback to a user.

For example, the manipulation unit 130 may be implemented as a dome switch or a touch pad that receives a command or information upon being pushed or touched by a user. Alternatively, the manipulation unit 130 may be implemented as a wheel, a jog dial, or a joystick.

The first manipulation module 130-1 may allow a user to input such commands as 'start', 'end', and 'scroll'. The second manipulation module 130-2 may allow a user to input numbers, characters or symbols.

The third manipulation module 130-3 may serve as a hot key for activating certain functions of the mobile terminal 100.

The mobile terminal 100 may also include a fourth manipulation module 130-4, which serves as a mouse.

The fourth manipulation module 130-4 may be implemented as an optical sensor sensing user touch input and inputting a command corresponding to the sensed user touch input to the mobile terminal 100.

The microphone module 122 may be configured to be able to receive the voice of a user or other sounds. The interface unit 170 may serve as a path for allowing the mobile terminal 100 to exchange data with an external device. For example, the interface unit 170 may be a connection terminal for connecting an earphone to the mobile terminal 100 in a wired or wireless manner or a power supply terminal for supplying power to a port for near field communication such as an IrDA port, a Bluetooth port, or a wireless local area network (LAN) port.

The interface unit 170 may be a card socket for a SIM card or a UIM card or for an exterior-type card such as a memory card for storing data.

The power supply unit 190 is inserted in the second rear case 100B-2. The power supply unit 190 may be a rechargeable battery and may be coupled to the second rear case 100B-2 so as to be able to be attached to or detached from the second rear case 100B-2.

FIG. 3 illustrates a rear perspective view of the mobile terminal 100 shown in FIG. 2. Referring to FIG. 3, a second camera module 121_2 may be disposed at the rear of the second rear case 100B-2 of the second body 100B. The second camera module 121-2 may have a different photographing direction from that of the first camera module 121-1 shown in FIG. 2. In addition, the number of pixels of the second camera module 121-2 may be different from the number of pixels of the first camera module 121-1.

For example, the first camera module 121-1 may be used to capture an image of the face of a user and then readily transmit the captured image during a video call. Thus, a low-pixel camera module may be used as the first camera module 121-1. The second camera module 121-2 may be used to capture an image of an ordinary subject. Given that images captured by the second camera module 121-2 generally do not need to be transmitted, a high-pixel camera module may be used as the second camera module 121-2.

A camera flash 121-3 and a mirror 121-4 may be disposed near the second camera module 121-2. The camera flash 121-3 illuminates a subject when the second camera module 121-2 captures an image of the subject. A user may look in the mirror 121-4 when capturing an image of himself/herself.

A second sound output module 152-2 may be disposed on the second rear case 100B-2.

The second sound output module 152-2 may realize a stereo function along with the first sound output module 152-1 shown in FIG. 2. The second sound output module 152-2 may be used in a speaker phone mode.

An antenna 111-1 for receiving a broadcast signal may be disposed on one side of the second rear case 100B-2. The antenna 111-1 may be ejected from the second body 100B-2.

A slider module 100C may be disposed on the first rear case 100A-2 of the first body 100A. The slider module 100C may couple the first body 100A and the second body 100B so that the first body 100A can slide along the second body 100B.

The slider module 100C may be partially exposed by the second front case 100B-1.

The second camera module 121-2 is illustrated in FIG. 3 as being disposed on the second body 100B, but the present invention is not restricted to this.

For example, at least one of the antenna 111-1, the first through third camera modules 121-1 through 121-3 and the second sound output module 152-2 may be mounted on the first body 100A, and particularly, the first rear case 100A-2 of the first body 100A. In this case, whichever of the antenna 111-1, the first through third camera modules 121-1 through 121-3 and the second sound output module 152-2 is mounted on the first rear case 100A-2 may be protected by the second body 100B when the mobile terminal 100 is closed. The first camera module 121-1 may be able to rotate and thus to cover the photographing direction of the second camera module 121-1. In this case, the second camera module 121-2 may be optional.

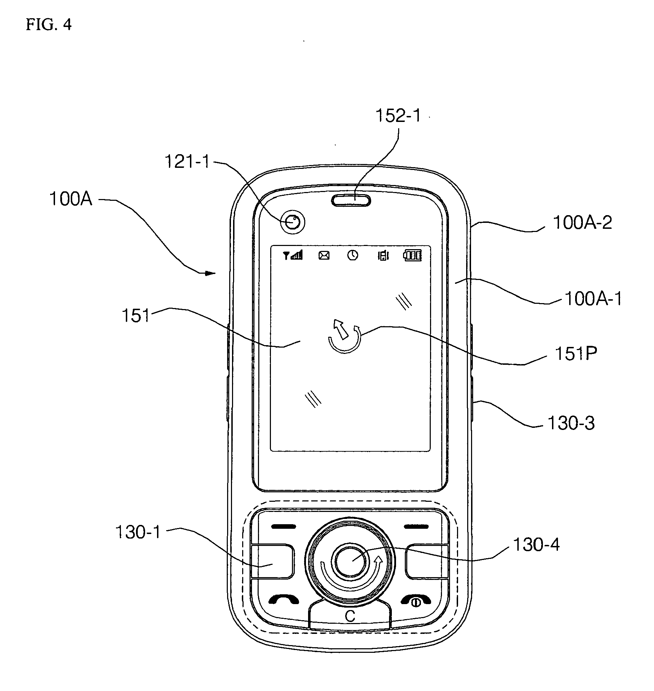

FIG. 4 illustrates a diagram for explaining the movement of a pointer 151P on the screen of the display module 151 of the mobile terminal 100 according to how the fourth manipulation module 130-4 is manipulated. The fourth manipulation module 130-4 is a button having the functions of a mouse. Therefore, the pointer 151 P moves along the direction of manipulation of the fourth manipulation module 130-4.

If the pointer 151P is placed on a menu displayed on the screen of the display module 151 by manipulating the fourth manipulation module 130-4 and the fourth manipulation module 130-4 is subsequently pressed, the menu currently being pointed at by the pointer 151P may be chosen. Then, a sub-menu screen corresponding to the chosen menu or an application execution screen for executing an application corresponding to the chosen menu may be displayed on the screen of the display module 151. For example, if a web screen is displayed on the screen of the display module 151 and the fourth manipulation module 130-4 is pressed when the pointer 151P is placed on a link on the web screen, a webpage corresponding to the link may be downloaded and then displayed on the screen of the display module 151.

The pointer 151P may point at not only menus but also any arbitrary items displayed on the screen of the display module 151. An area on the screen of the display module 151 may be chosen by dragging the pointer 151P on the screen of the display module 151 through the manipulation of the fourth manipulation module 130-4. The fourth manipulation module 130-4 may be a jog dial or a touch wheel.

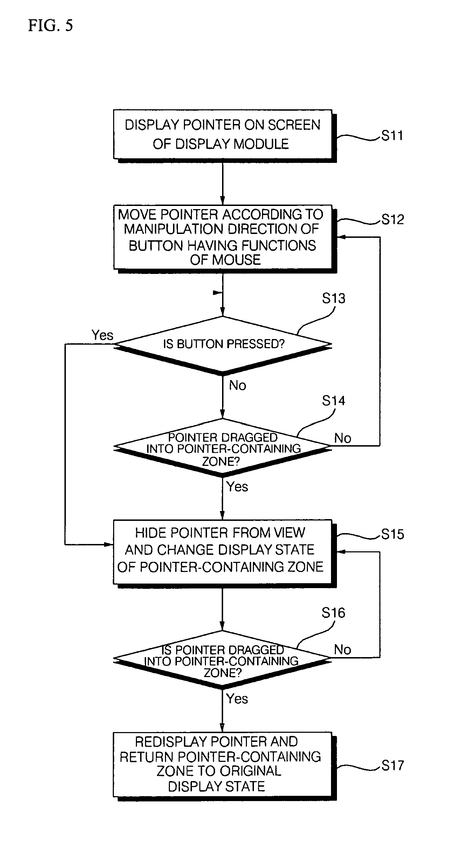

FIG. 5 illustrates a flowchart of a pointer controlling method of a mobile terminal, according to an embodiment of the present invention. Referring to FIG. 5, when the fourth manipulation module 130-4, which is a button having the functions of a mouse, is manipulated, the pointer 151P is displayed on the screen of the display module 151 (S11). The pointer 151 P moves along the direction of the manipulation of the fourth manipulation module 130-4 (S12).

The control unit 180 displays a pointer-containing zone in an area on the screen of the display module 151. Once the pointer 151P is contained in the pointer-containing zone, the pointer 151P may be hidden from view. The display state of the pointer-containing zone may be changed when the pointer 151P is contained in the pointer-containing zone.

A command to hide the pointer may be input to the mobile terminal 100 by manipulating the manipulation unit 130, for example, by pressing the fourth manipulation module 130-4.

If a user presses the fourth manipulation module 130-4 in a predefined manner while moving the pointer on the screen of the display module 151, a function of hiding a pointer may be executed. Once the pointer 151P is contained in the pointer-containing zone, the pointer 151P is not displayed any longer on the screen of the display module 151, i.e., is hidden from view. If the user drags the pointer 151P into the pointer-containing zone by manipulating the fourth modulation module 130-4, the pointer 151 P may also be hidden from view.

Therefore, the control unit 180 determines whether the fourth manipulation module 130-4 has been pressed (S13) or whether the pointer 151P has been dragged into the pointer-containing zone (S14). If a command to hide the pointer 151P is input to the mobile terminal 100 by pressing the fourth manipulation module 130-4 (S13) or dragging the pointer 151 P into the pointer-containing zone (S 14), the control unit 180 may hide the pointer 151 P from view and may change the display state of the pointer-containing zone (S15).

The pointer-containing zone may be displayed in various manners. For example, the pointer-containing zone may account for part of the screen of the display module 151. Alternatively, the pointer-containing zone may be displayed as an icon. If the display state of the pointer-containing zone is changed, the color or the shape of the pointer-containing zone may be changed.

A user may input a command to release the function of hiding a pointer, i.e., a command to reveal a hidden pointer, to the mobile terminal 100 by manipulating the fourth manipulation module 130-4 in a predefined manner, for example, by manipulating the fourth manipulation module 130-4 more than a predefined number of times within a predetermined amount of time. In this case, the control unit 180 may redisplay the pointer 151 P on the screen of the display module 151.

The command to reveal a hidden pointer may be stored as a hot key and may thus be input to the mobile terminal 100 by manipulating the hot key (S16).

The control unit 180 determines whether the fourth manipulation module 130-4 has been manipulated in a predefined manner or whether the hot key has been manipulated (S 17). If the command to reveal a hidden pointer is input to the mobile terminal 100, the control unit 180 may display the pointer 151P on the screen of the display module 151 and may return the pointer-containing zone to the original display state (S 18). Thus, the user may recognize that the pointer 151P is not being hidden from view.

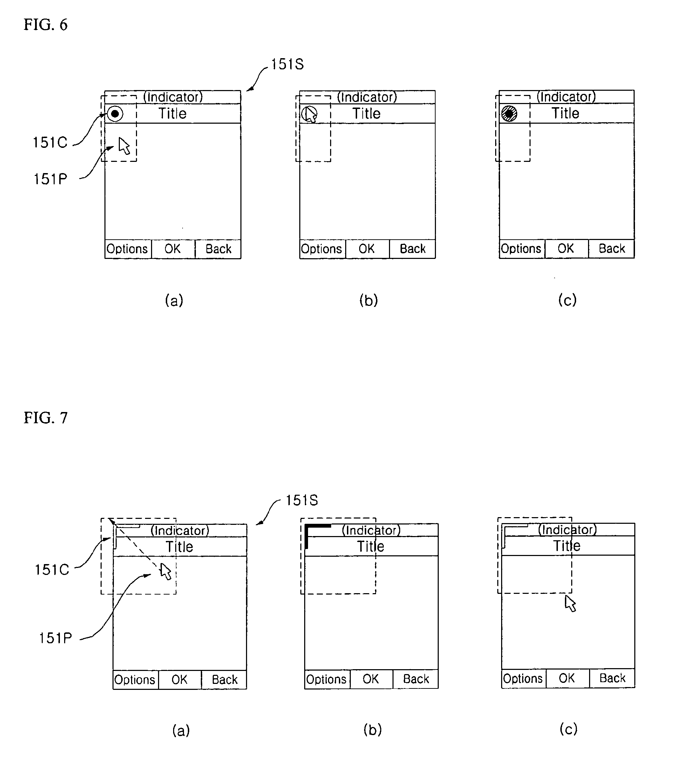

FIGS. 6 and 7 illustrate various menu screens 151S displayed by the display module 151 of the mobile terminal 100.

Referring to FIG. 6, the control unit 180 may display a pointer-containing zone 151C on the screen of the display module 151 as an icon. When a pointer 151 P is displayed on the screen of the display module 151, as illustrated in FIG. 7(a), the pointer 151 P may be dragged into the pointer-containing zone 151C, as illustrated in FIG. 6(b), by appropriately manipulating the fourth manipulation module 130-4. Once the pointer 151P is dragged into the pointer-containing zone 151C, the control unit 180 performs a function of hiding a pointer. As a result, the pointer 151P is hidden from view. Then, the control unit 180 may change the color of the pointer-containing zone 151C, as illustrated in FIG. 6(c). Alternatively, the control unit 180 may change the shape of the pointer-containing zone 151C.

When the color of the pointer-containing zone 151C is changed, a user may recognize that the pointer 151P is temporarily hidden from view. If the user wishes to redisplay the pointer 151P on the screen of the display module 151, the user may input a command to reveal a hidden pointer to the mobile terminal 100 by manipulating the fourth manipulation module 130-4 in a predefined manner or manipulating a predetermined hot key. In this case, the control unit 180 may return the pointer-containing zone 151C to the original display state shown in FIG. 6(a) or 6(b).

Referring to FIG. 7, the pointer-containing zone 151C accounts for part of a menu screen 151S displayed by the display module 151. When a pointer 151P is displayed on the screen of the display module 151, as illustrated in FIG. 7(a), the pointer 151P may be dragged into the pointer-containing zone 151C, as illustrated in FIG. 7(b), by appropriately manipulating the fourth manipulation module 130-4. Then, the control unit 180 performs a function of hiding a pointer. As a result, the pointer 151P is hidden from view, and the color of the pointer-containing zone 151C may be changed, as illustrated in FIG. 7(c).

When the color of the pointer-containing zone 151C is changed, a user may recognize that the pointer 151P is temporarily hidden from view. If the user wishes to redisplay the pointer 151 P on the screen of the display module 151, the user may input a command to reveal a hidden pointer to the mobile terminal 100 by manipulating the fourth manipulation module 130-4 in a predefined manner. In this case, the menu screen 151S shown in FIG. 7(a) or 7(c) may be displayed by the display module 151.

The preceding embodiments refer to dragging the pointer. This dragging may be achieved with a stylus, finger or other input device to a touch screen. Additionally, other methods of moving the pointer may be employed such as moving the pointer with a jog wheel, buttons, touch pad or other input device. Also, when the pointer disappears or reappears, the mobile terminal may buzz, vibrate or emit an audible sound. Also, in some embodiments, the pointer may animated. Also, the design or animation of the pointer may be selectable by a user from a list of icons via a menu. Also, the ability to hide and then restore the pointer may be turned on or off by the user via a menu. In other embodiments, the ability to hide and then restore the pointer may preset by the manufacturer or distributor.

The present invention can be realized as computer-readable code written on a computer-readable recording medium included in a mobile terminal such as a mobile station modem (MSM). The computer-readable recording medium may be any type of recording device in which data is stored in a computer-readable manner. Examples of the computer-readable recording medium include a ROM, a RAM, a CD-ROM, a magnetic tape, a floppy disc, and an optical data storage. The computer-readable recording medium can be distributed over a plurality of computer systems connected to a network so that computer-readable code is written thereto and executed therefrom in a decentralized manner. Functional programs, code, and code segments needed for realizing the present invention can be easily construed by one of ordinary skill in the art.

The devices described herein may include one or more memories. These memories may be implemented using any type (or combination) of suitable volatile and non-volatile memory or storage devices including random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, card-type memory, or other similar memory or data storage device.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof.

For a software implementation, the embodiments described herein may be implemented with separate software modules, such as procedures and functions, each of which perform one or more of the functions and operations described herein. The software codes can be implemented with a software application written in any suitable programming language and may be stored in memory, and executed by a controller or processor.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A pointer display method of a mobile terminal having a display screen, the pointer display method comprising:
displaying a pointer for choosing a predetermined area or item on the display screen;
displaying a pointer-containing zone on the display screen;
executing a function of hiding the pointer in response to a first user input; and
changing a display state of the pointer-containing zone when the pointer is hidden from view.

2. The pointer display method of claim 1, wherein the step of executing comprises executing the function of hiding a pointer when the pointer is moved into the pointer-containing zone.

3. The pointer display method of claim 1, wherein the step of executing comprises executing the function of hiding a pointer when a button having functions of a mouse is manipulated in a predefined manner.

4. The pointer display method of claim 1, wherein the step of changing comprises changing a color of the pointer-containing zone.

5. The pointer display method of claim 1, wherein the step of displaying a pointer-containing zone on the display screen comprises:
displaying the pointer-containing zone on one of an entirety and a part of the display screen of the mobile terminal.

6. The pointer display method of claim 1, wherein the step of displaying a pointer-containing zone on the display screen comprises:
displaying the pointer-containing zone as an icon.

7. The pointer display method of claim 6, wherein the step of changing comprises changing a shape of the icon.

8. The pointer display method of claim 1, further comprising:
redisplaying the pointer on the display screen of the mobile terminal in response to a second user input.

9. The pointer display method of claim 8, further comprising:
returning the display state of the pointer-containing zone to an original display state when the pointer reappears on the display screen of the mobile terminal.

10. The pointer display method of claim 8, further comprising:
revealing a hidden pointer when a button having the functions of a mouse is manipulated in a predefined manner.

11. The pointer display method of claim 10, wherein the step of revealing a hidden pointer is executed in response to a user manipulation of a hot key for inputting a command to reveal a hidden pointer.

12. A mobile terminal, comprising:
a display module having a display screen and configured to display a pointer for choosing a predetermined area or item and to display a pointer-containing zone in which the pointer can be contained;
a input device configured to enable a user to input commands; and
a control unit operatively connected to the display module and input device, the control unit configured to execute a function of hiding the pointer and to change a display state of the pointer-containing zone if the pointer is hidden from view.

13. The mobile terminal of claim 12, wherein the control unit is configured to execute the function of hiding a pointer when the pointer is moved into the pointer-containing zone.

14. The mobile terminal of claim 12, wherein the control unit is configured to execute the function of hiding the pointer when a button of the input device and having functions of a mouse is manipulated in a predefined manner.

15. A computer-readable recording medium having recorded thereon a computer program for executing the pointer display method comprising the steps of:
displaying a pointer for choosing a predetermined area or item on the display screen;
displaying a pointer-containing zone on the display screen;
executing a function of hiding the pointer in response to a first user input; and
changing a display state of the pointer-containing zone when the pointer is hidden from view.
